# EUROPEAN PATENT SPECIFICATION

(11) **EP 2 670 978 B1**
(45) Date of publication and mention of the grant of the patent: **29.07.2015**
(21) Application number: 12704665.4
(22) Date of filing: 03.02.2012
(51) Int. Cl.: F03D 9/00, F03D 1/02

(54) **A WIND TURBINE ARRANGEMENT WITH A MAIN WIND TURBINE AND AT LEAST ONE SECONDARY WIND TURBINE**
WINDKRAFTANLAGE MIT EINER HAUPTWINDTURBINE UND MINDESTENS EINER SEKUNDÄREN WINDTURBINE
AMÉNAGEMENT D'ÉOLIENNES DOTÉ D'UNE ÉOLIENNE PRINCIPALE ET D'AU MOINS UNE ÉOLIENNE SECONDAIRE

(30) Priority: 04.02.2011 DK 201170065; 04.02.2011 US 201161439585 P
(43) Date of publication of application: 11.12.2013
(73) Proprietor: Vestas Wind Systems A/S, 8200 Aarhus N (DK)
(72) Inventor: ROSENVARD, Paw, DK-8883 Gjern (DK)
(74) Representative: Vestas Patents Department
(86) International application number: PCT/DK2012/050044
(87) International publication number: WO 2012/103894

(56) References cited:
- DE-A1- 19 805 667
- DE-U1-202009 004 539
- US-A1- 2011 025 058

## Description

### FIELD OF THE INVENTION

The present invention relates to a wind turbine arrangement comprising a main turbine arranged to produce power for an external power recipient, such as a power grid, and at least one secondary wind turbine arranged to produce power for one or more power consuming internal systems of the main wind turbine. The secondary wind turbine(s) preferably operate as a backup power supply for supplying power to at least some of the power consuming internal systems of the main wind turbine, in the case that a primary power supply for the power consuming internal systems fail or is interrupted. The wind turbine arrangement of the invention is particularly suitable for use in an offshore wind power installation.

### BACKGROUND OF THE INVENTION

In modern wind turbines a number of power consuming internal systems are required in order to ensure proper and safe operation of the wind turbine. Such systems include, but are not limited to, yaw systems for rotating the nacelle of the wind turbine in order to orientate the wind turbine blades carried by the nacelle in a desired manner with respect to the wind direction, lubricating systems for moving parts of the wind turbine, such as a gear arrangement, pitch systems for rotating the wind turbine blades about a longitudinal axis of the blade, temperature control systems, such as cooling systems and heating systems, electrical light, various monitoring systems, various sensors, control systems, etc.

The power consuming internal systems are normally powered by an external power supply, such as a power grid. However, in the case that the external power supply fails or is interrupted, the power consuming internal systems are no longer able to operate. Since proper operation of some of the power consuming internal systems is vital for the wind turbine, it is necessary to provide a backup power supply in order to be able to supply power to the systems in the case that the external power supply fails or is interrupted. For instance, it is very important that the blades of the wind turbine are arranged in a position where the loads on the wind turbine, in particular edgewise loads on the wind turbine blades, are minimised, when the wind speed exceeds a given threshold wind speed. This may, e.g., be an upwind position. If this is not ensured, there is a risk that damage is caused to the wind turbine blades.

In some prior art wind turbines, a backup power supply has been provided by arranging a diesel generator at or near the wind turbine, the diesel generator producing power and supplying the produced power to the power consuming internal systems of the wind turbine. One disadvantage of using a diesel generator for this purpose is that the fuel used for the diesel generator is environmentally undesirable. Furthermore, it is necessary to refuel the diesel generator frequently. In order to do this, personnel must approach the wind turbine. This is particularly a disadvantage in the case that the wind turbine is an offshore wind turbine, since it, in this case, is very difficult and expensive to approach the wind turbine.

In other prior art wind turbines, a backup power supply has been provided by allowing neighbouring wind turbines of a wind farm to supply power to each other. WO 2010/031575 A2 discloses a turbine farm comprising a plurality of individual turbines, each having an auxiliary component circuit. The farm further comprises a master transformer arranged to be coupled between each of the plurality of individual turbines and an electrical grid. The farm further comprises an auxiliary transformer coupled between the sub-station transformer and the auxiliary component circuit in each of the individual turbines. When in use power is transmitted from the sub-station transformer back to each auxiliary component circuit.

US 2011/025058 A1 describes an integrated system of communicating energy storage devices for supplying an alternate power source to operating systems for a wind turbine.

### DESCRIPTION OF THE INVENTION

It is an object of embodiments of the invention to provide a wind turbine arrangement in which backup power supply to power consuming internal systems is ensured without the requirement of personnel accessing the site of the wind turbine arrangement.

It is a further object of embodiments of the invention to provide a wind turbine arrangement comprising a backup power supply for power consuming internal systems which is not dependent on a fuel supply.

It is an even further object of embodiments of the invention to provide a method for performing yawing operations of a wind turbine in which it is ensured that the wind turbine blades can be moved to a safe position, even if a primary power supply for the yaw system fails or is interrupted.

According to a first aspect the invention provides a wind turbine arrangement as claimed in claim 1.

In the present context the term 'wind turbine arrangement' should be interpreted to mean an arrangement which comprises a wind turbine which is arranged to produce power to an external power recipient, such as a power grid, and which further comprises other parts or components which cooperate with the power producing wind turbine during operation and/or which are essential for proper operation of the power producing wind turbine.

The wind turbine arrangement, thus, comprises a main wind turbine and at least one secondary wind turbine. The main wind turbine is arranged to produce electrical power, in a manner known per se, and the main wind turbine is adapted to supply produced electrical power to an external power recipient. Thus, the main wind turbine is the power producing wind turbine of the wind turbine arrangement.

The main wind turbine comprises one or more power consuming internal systems. Such system may include, but are not limited to, a yaw system, lubrication systems for moving parts, e.g. a gear system, heating systems, cooling systems, electrical light, control systems, monitoring systems, etc. As described above, proper operation of some of these systems is essential for minimising the risk of damage to the main wind turbine. For instance, during high wind speeds, it is essential that the yaw system is operable, in order to ensure that the wind turbine blades are always positioned in an optimal position with respect to the wind direction, e.g. directly upwind or directly downwind, in order to prevent edgewise vibrations in the wind turbine blades.

During normal operation of the main wind turbine, the power consuming internal system(s) may be powered by an external primary power supply, e.g. a power grid. However, in the case that the primary power supply fails or is interrupted, e.g. because the wind turbine arrangement is disconnected from the power grid, e.g. due to a cable failure, a backup power supply for at least some of the power consuming internal system(s) is required.

The wind turbine arrangement comprises at least one secondary wind turbine. Similarly to the main wind turbine, the secondary wind turbine(s) is/are arranged to produce electrical power in a manner known per se. The electrical power produced by the secondary wind turbine(s) is supplied to at least some of the power consuming internal system(s) of the main wind turbine, and the secondary wind turbine(s) is/are electrically disconnected from the external power recipient. Thus, the secondary wind turbine(s) do(es) not produce electrical power for the external power recipient. Instead, the produced electrical power is supplied to at least some of the power consuming internal system(s) of the main wind turbine. Accordingly, the secondary wind turbine(s) may operate as a backup power supply for at least some of the power consuming internal system(s) of the main wind turbine.

The secondary wind turbine(s) is/are preferably of a kind which does not require power in order to produce power. For instance, the secondary wind turbine(s) may be (a) permanent magnet wind turbine(s) with no yaw or pitch functions, or with a passive yaw function.

It is an advantage that the secondary wind turbine(s) operate(s) as a backup power supply for the power consuming internal system(s) of the main wind turbine for the following reasons. The backup power supply is completely independent on external power sources, such as a power grid or cabling. The backup power supply does not require refuelling, and is therefore capable of operating continuously without personnel gaining access to the wind turbine arrangement. The backup power supply does not rely on fossil fuels, and is therefore environmentally advantageous. Since wind will always be available when the backup power is needed most, i.e. under high wind conditions, the backup power supply is reliable.

The external power recipient may be or comprise a power grid, such as a large power grid forming part of a public power supply system. As an alternative, the external power recipient may be or comprise a smaller local system or a large installation requiring its own power supply.

As described above, the power consuming internal system(s) may include a yaw system. A yaw system of a wind turbine is used for rotating a nacelle, carrying a set of wind turbine blades, about a substantially vertical axis in order to orientate the wind turbine blades with respect to the wind direction. In order to maximise power production, and in order to minimise the risk of damage to the wind turbine, in particular to the wind turbine blades, e.g. due to edgewise vibrations, the wind turbine blades should normally be oriented either directly upwind or directly downwind. It is therefore essential that power is supplied to the yaw system during severe wind conditions, such as at high wind speeds. Since the power grid is very likely to fail or be disconnected during severe wind conditions, a backup power supply for the yaw system is required in the case that the yaw system is normally powered by the power grid.

Alternatively or additionally, the power consuming internal system(s) may include one or more lubrication systems for one or more moving parts of the main wind turbine. The moving part(s) may, e.g., form part of a gear system or a bearing system of the main wind turbine. According to this embodiment, it is ensured that the moving part(s) is/are properly lubricated, even if the primary power supply of the lubrication system fails or is interrupted. Furthermore, for some moving parts, such as moving parts of a large gear system of a wind turbine, the lubrication system also provide cooling for the moving parts. In this case, it is further ensured that the moving part(s) is/are cooled, even if the primary power supply fails or is interrupted.

As mentioned above, the power consuming internal system(s) of the main wind turbine may, alternatively or additionally, comprise any other suitable kind of power consuming system, such as heating systems, cooling systems, electrical light, control systems, monitoring systems, etc.

Alternatively or additionally, the power consuming internal system(s) may include one or more power storage devices, such as a rechargeable battery, an uninterruptable power supply (UPS), a capacitor, a mechanical power storage device, such as a spring or a deformable material, etc. According to this embodiment, at least some of the power produced by the secondary wind turbine(s) may be stored in the power storage device(s), and the stored power may subsequently be used as a backup power supply for at least some of the power consuming internal system(s) of the main wind turbine. In the case that the power storage device(s) is or comprises a capacitor, the capacitor may be coupled directly to a drive mechanism of a gear lubrication pump in the main wind turbine. Whenever a grid loss is affecting the input to the drive mechanism of the gear lubrication pump, the capacitor will provide the needed power to continue the lubrication and cooling of the gearbox, during the transition from full wind turbine power production to standstill or during as short grid loss until grid returns.

The power storage devices will only charge, when grid is available or other auxiliary backup supply, e.g. from the secondary wind turbine(s) is available.

As mentioned above, the secondary wind turbine(s) may form a backup power supply for a primary power supply to the power consuming internal system(s). The primary power supply may, e.g., be a power grid, or it may be another kind of local power source. The secondary wind turbine(s) may operate solely as a backup power supply, in which case it/they is/are disabled during normal operation of the wind turbine arrangement and/or when the primary power supply operates properly. As an alternative, the secondary wind turbine(s) may further be arranged to supply power to at least some of the power consuming internal system(s) of the main wind turbine during normal operation of the wind turbine arrangement, in addition to operating as a backup power supply. Thereby the requirement for external power to the wind turbine arrangement can be minimised. Finally, it could be contemplated that the secondary wind turbine(s) constitute(s) the only power supply to the power consuming internal system(s) of the main wind turbine.

Each of the secondary wind turbine(s) may comprise a braking mechanism arranged to prevent the secondary wind turbine from producing power when the braking mechanism is in an activated state, the braking mechanism(s) of the secondary wind turbine(s) may be in an activated state during normal operation of the main wind turbine, and the braking mechanism(s) may be moved to a deactivated state in the case that the primary power supply to the power consuming internal system(s) is interrupted.

According to this embodiment, the secondary wind turbine(s) is/are prevented from producing power during normal operation of the main wind turbine, and as long as the primary power supply to the power consuming internal system(s) actually supplies power. Accordingly, the primary power supply is the sole power supply to the power consuming internal system(s) during normal operation of the wind turbine arrangement. However, in the case that the primary power supply fails or is interrupted, the braking mechanism of each of the secondary wind turbine(s) is moved to a deactivated state, and the secondary wind turbine(s) is/are thereby allowed to produce power. Accordingly, the backup power supply is automatically activated in the case that the primary power supply fails or is interrupted, i.e. in the case that the backup power supply is required.

The braking mechanism(s) may, e.g., be electrical brake(s) of the kind which clamp a movable part of the secondary wind turbine as long as power is supplied to the braking mechanism, and which is automatically released when power is no longer supplied to the braking mechanism.

According to one embodiment, the power produced by the secondary wind turbine(s) may be insufficient to supply each of the power consuming internal system(s) of the main wind turbine. In this case, it is necessary to prioritise the use of the available power in order to ensure that the essential functions are operable, while the less important functions are disabled. For instance, the control system and/or monitoring systems, such as wind sensors, wind vanes, yaw monitors etc., of the main wind turbine may be considered the most essential power consuming internal systems of the main wind turbine, since they provide information regarding whether or not the main wind turbine operates properly and/or whether or not there is a risk of damage to one or more components of the main wind turbine. Accordingly, power may first and foremost be supplied to such systems. When it has been ensured that the control system and relevant monitoring systems are provided with sufficient power, further available power may advantageously be supplied to the yaw system in order to allow the wind turbine blades to be moved to a desired position, thereby minimising the risk of damage to the wind turbine blades. However, once the nacelle has been yawed to a desired position, and the wind direction does not change, the yaw system no longer requires power, and the available power may be directed to other power consuming internal systems, such as lubrication systems, heating systems, cooling systems, etc. as described above. Alternatively or additionally, available power may be stored in a power storage device as described above, and used at a later time where the power requirements of the power consuming internal system(s) of the main wind turbine may exceed the power produced by the secondary wind turbine(s).

The main wind turbine and the secondary wind turbine(s) may be mounted on a common mounting structure. The common mounting structure may, e.g., be or comprise an offshore platform connected to an offshore foundation and carrying the main wind turbine as well as the secondary wind turbine(s). Alternatively or additionally, the common mounting structure may be or comprise a common foundation. According to this embodiment, at least the secondary wind turbine(s) may be pre-mounted on the common mounting structure, in which case the common mounting structure, along with the secondary wind turbine(s), is delivered as one unit at the operating site of the wind turbine arrangement. As an alternative, the secondary wind turbine(s) may be arranged next to the main wind turbine, or it/they may be mounted on the main wind turbine.

The wind turbine arrangement may comprise at least two secondary wind turbines. According to this embodiment, the power supply constituted by the secondary wind turbines is redundant in the sense that if one of the secondary wind turbines fails or malfunctions, or for some other reason is unable to extract power from the available wind, one of the other secondary wind turbine(s) will most likely be able to provide the required power to the power consuming internal system(s) of the main wind turbine.

The secondary wind turbines may be arranged relative to the main wind turbine and relative to each other in such a manner that at least one secondary wind turbine is arranged out of the wake or lee of the main wind turbine, at any wind direction. In the case that the main wind turbine is significantly larger than the secondary wind turbines, a secondary wind turbine may very well be arranged in the lee of the tower of the main wind turbine when the prevailing wind is in a specific direction. Other parts of the main wind turbine may, alternatively or additionally, create wake or lee with respect to the secondary wind turbines. However, by distributing the secondary wind turbines circumferentially with respect to the tower of the main wind turbine, it can be ensured that, regardless of the wind direction, at least one of the secondary wind turbines will be arranged out of the wake or lee of the main wind turbine, and will thereby be able to extract energy from the wind and produce the required power.

According to a preferred embodiment, the wind turbine arrangement comprises four secondary wind turbines being evenly distributed circumferentially with respect to the tower of the main wind turbine. According to this embodiment, it is ensured that regardless of the wind direction, at least two secondary wind turbines will be arranged in a position where they are capable of extracting energy from the wind. Thereby redundancy is provided, at any wind direction, thereby ensuring that power can be produced by the secondary wind turbines, even if one or the secondary wind turbines fails of malfunctions.

At least one of the secondary wind turbine(s) may be (a) vertical axis wind turbine(s) (VAWT). A vertical axis wind turbine is a wind turbine in which a rotor rotates about a substantially vertical axis in response to wind acting on the wind turbine. One advantage of using a vertical axis wind turbine as a secondary wind turbine for the wind turbine arrangement according to the invention is, that vertical axis wind turbines are normally capable of extracting energy from wind from any direction, without requiring yawing operations.

Alternatively or additionally, at least one of the secondary wind turbine(s) may be (a) horizontal axis wind turbine(s) (HAWT). A horizontal axis wind turbine is a wind turbine in which a rotor rotates about a substantially horizontal axis in response to wind acting on the wind turbine. Horizontal axis wind turbines normally comprise a set of wind turbine blades, often three wind turbine blades, arranged to extract energy from the wind. In horizontal axis wind turbines, the wind turbine blades need to be oriented with respect to the wind direction, as described above. Accordingly, yawing operations are necessary.

All of the secondary wind turbines may be vertical axis wind turbines. As an alternative, all of the secondary wind turbines may be horizontal axis wind turbines. As another alternative, some of the secondary wind turbines may be vertical axis wind turbines, and some of the secondary wind turbines may be horizontal axis wind turbines.

At least one of the secondary wind turbine(s) is arranged to operate as a wind sensor. According to this embodiment, it is not necessary to apply a separate wind sensor for measuring the wind speed and/or the wind direction, at least when the wind turbine arrangement is operated in such a manner that the secondary wind turbine(s) provide(s) backup power for the power consuming internal system(s) of the main wind turbine. Thereby it is not necessary to produce power to operate such a separate wind sensor under these circumstances.

The main wind turbine may have a nominal power which is significantly higher than the nominal power of each of the secondary wind turbine(s). According to this embodiment, the main wind turbine is significantly larger than the secondary wind turbine(s), in terms of power production as well as in terms of physical dimensions.

According to a second aspect the invention provides a method as claimed in claim 13.

It should be noted that a person skilled in the art would readily recognise that any feature described in combination with the first aspect of the invention could also be described in combination with the second aspect of the invention, and vice versa.

It should be noted that it is not ruled out that the power produced by the secondary wind turbine(s) is additionally used for powering other power consuming internal systems of the main wind turbine, as described above with reference to the first aspect of the invention.

The step of allowing the secondary wind turbines to supply power to the power consuming internal system(s) may comprise deactivating a braking mechanism of each of the secondary wind turbine(s), thereby allowing the secondary wind turbine(s) to produce power. According to this embodiment, the secondary wind turbine(s) are prevented from producing power as long as the primary power supply supplies power to the power consuming internal system(s) of the main wind turbine, and the secondary wind turbine(s) commence(s) producing power when it is detected that the primary power supply has been interrupted. The braking mechanism(s) may be of a kind which is manually switched between an activated and a deactivated state, or which is switched between the states in response to a signal generated by a detecting mechanism. As an alternative, the braking mechanism(s) may be of a kind which is automatically and directly switched to a deactivated state when the primary power supply is interrupted. This is, e.g., obtained by using electrical braking mechanisms.

The method further comprises the step of measuring wind speed by means of one or more of the secondary wind turbine(s). According to this embodiment, at least one of the secondary wind turbine(s) operate(s) as a wind sensor, as described above.

### BRIEF DESCRIPTION OF THE DRAWINGS

The invention will now be described in further detail with reference to the accompanying drawings in which
Fig. 1 is a perspective view of a wind turbine arrangement according to a first embodiment of the invention,
Fig. 2 is a perspective view of the wind turbine arrangement of Fig. 1 from a different angle,
Fig. 3 shows a detail of the wind turbine arrangement of Figs. 1 and 2,
Fig. 4 is a platform for the wind turbine arrangement of Figs. 1-3,
Fig. 5 shows a detail of a wind turbine arrangement according to a second embodiment of the invention,
Fig. 6 is a platform for the wind turbine arrangement of Fig. 5, and
Fig. 7 is a block diagram illustrating power consuming internal electrical systems of a wind turbine arrangement according to an embodiment of the invention.

### DETAILED DESCRIPTION OF THE DRAWINGS

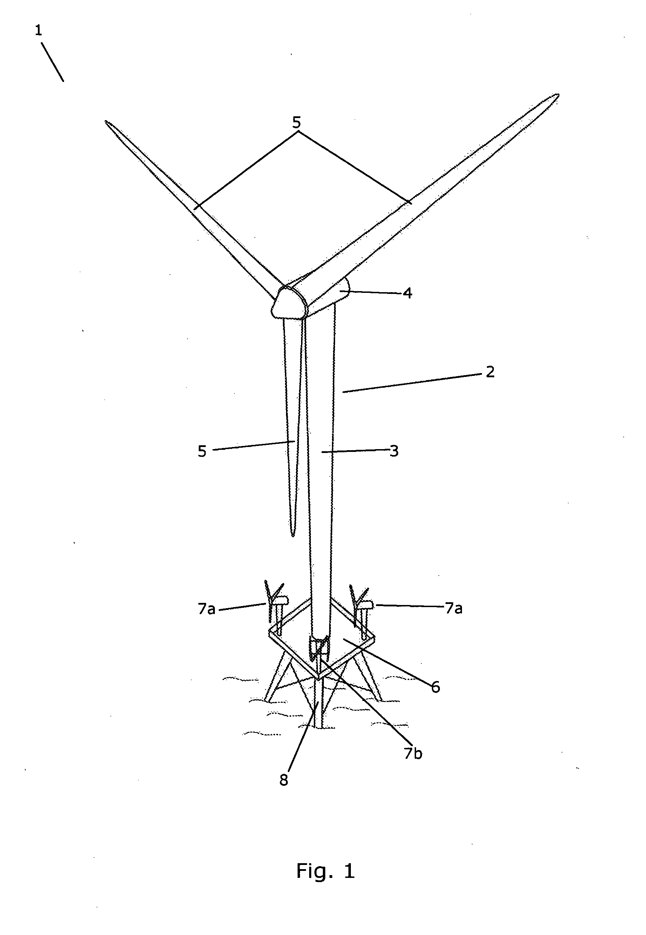

Fig. 1 is a perspective view of a wind turbine arrangement 1 according to a first embodiment of the invention. The wind turbine arrangement 1 comprises a main wind turbine 2 comprising a tower 3 and a nacelle 4 carrying a rotor with three wind turbine blades 5. The tower 3 of the main wind turbine 2 is mounted on a platform 6 which also has four secondary wind turbines 7a, 7b, three of which are visible, mounted thereon. Two of the secondary wind turbines 7a are horizontal axis wind turbines (HAWT), and two of the secondary wind turbines 7b, one of which is visible, are vertical axis wind turbines (VAWT). The platform 6 is arranged on an offshore foundation 8. Thus, the wind turbine arrangement 1 is arranged offshore.

The main wind turbine 2 is adapted to produce electrical power to a power grid. The secondary wind turbines 7a, 7b are disconnected from the power grid. Instead, the electrical power produced by the secondary wind turbines 7a, 7b is supplied to one or more power consuming internal systems of the main wind turbine 2, e.g. yaw system, control systems, monitoring systems, heating systems, cooling systems, lubricating systems, electrical light, etc.

The wind turbine arrangement 1 of Fig. 1 may operate in the following manner. During normal operation, the main wind turbine 2 converts energy of the wind into electrical power which is supplied to the power grid. The power consuming internal systems of the main wind turbine 2 are supplied by an external, primary power supply, e.g. the power grid. The secondary wind turbines 7a, 7b may be provided with electrical brakes which are in an activated state, i.e. they may be prevented from producing power. Alternatively, one or more of the secondary wind turbines 7a, 7b may be allowed to produce power for some of the power consuming internal systems of the main wind turbine 2 and/or for a power storage device, such as a rechargeable battery, an UPS or a capacitor.

In the case that the connection to the power grid is lost, the power supply to the power consuming internal systems of the main wind turbine 2 is interrupted. The interruption of the power supply causes the electrical brakes of the secondary wind turbine 7a, 7b to be released, i.e. the secondary wind turbines 7a, 7b are allowed to produce power. Accordingly, the secondary wind turbines 7a, 7b operate as a backup power supply for the primary power supply to the power consuming internal systems of the main wind turbine 2.

The secondary wind turbines 7a, 7b are substantially evenly distributed circumferentially around the tower 3 of the main wind turbine 2. Thereby it is ensured, that regardless of the wind direction, at least two of the secondary wind turbines 7a, 7b will be out of the lee of the tower 3 of the main wind turbine 2, and will thereby be capable of catching the wind and produce electrical power. More particularly, at least one horizontal axis wind turbine 7a and at least one vertical axis wind turbine 7b will be out of the lee of the tower 3. Accordingly, it is ensured that backup power can be produced, regardless of the wind direction, and even if one of the secondary wind turbines 7a, 7b should fail or malfunction.

One advantage of using vertical axis wind turbines as the secondary wind turbines 7b is that they are capable of catching wind from any direction, i.e. yawing operations are not required in order to allow the wind turbines 7b to produce electrical power.

One or more of the secondary wind turbines 7a, 7b further operate as a wind sensor. In this case the wind turbine arrangement 1 may operate in the following manner. During normal operation, the main wind turbine 2 produces electrical power as described above. In the case that the connection to the power grid is interrupted, the braking mechanisms of the secondary wind turbines 7a, 7b are deactivated. In the case that the wind speed is very low, the secondary wind turbines 7a, 7b will not immediately start to supply electrical power to the power consuming internal systems. However, since the braking mechanisms are deactivated, the secondary wind turbines 7a, 7b can rotate. From the power produced by the secondary wind turbines 7a, 7b, the wind speed can be derived. When the wind speed reaches a specified threshold value, the power produced by the secondary wind turbines 7a, 7b is supplied to at least some of the power consuming internal systems of the main wind turbine 2. As described above, the supply of power may be prioritised in such a manner that the most important functions receive power before the less important functions.

It should be noted that even though the wind turbine arrangement 1 of Fig 1 comprises two horizontal axis wind turbines 7a and two vertical axis wind turbines 7b, it is within the scope of the present invention that all of the secondary wind turbines 7a, 7b could be horizontal axis wind turbines or that all of the secondary wind turbines 7a, 7b could be vertical axis wind turbines. It is also within the scope of the present invention that the wind turbine arrangement 1 could comprise fewer or more secondary wind turbines 7a, 7b.

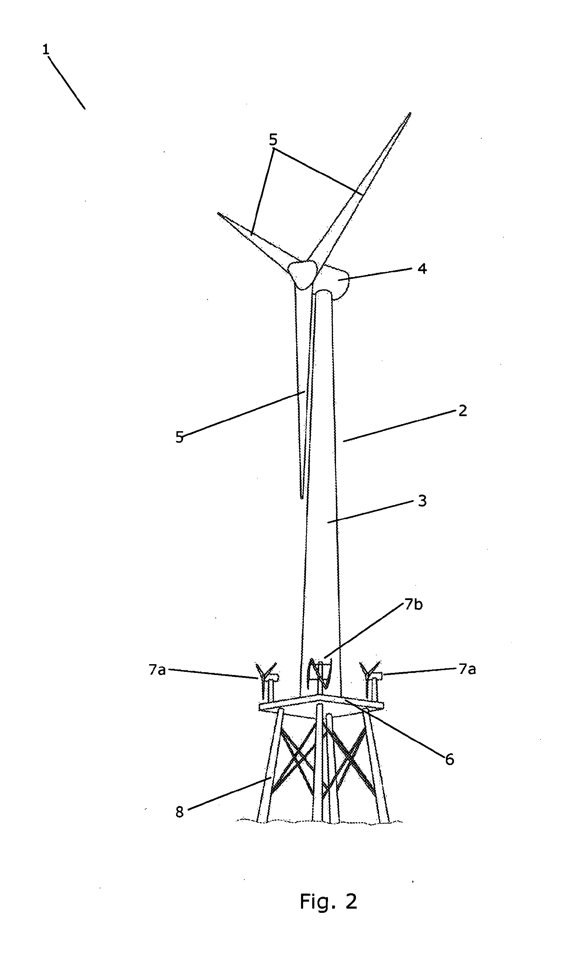

Fig. 2 is a perspective view of the wind turbine arrangement 1 of Fig. 1, seen from a different angle. Thus, in Fig. 2 the offshore foundation 8 can be clearly seen.

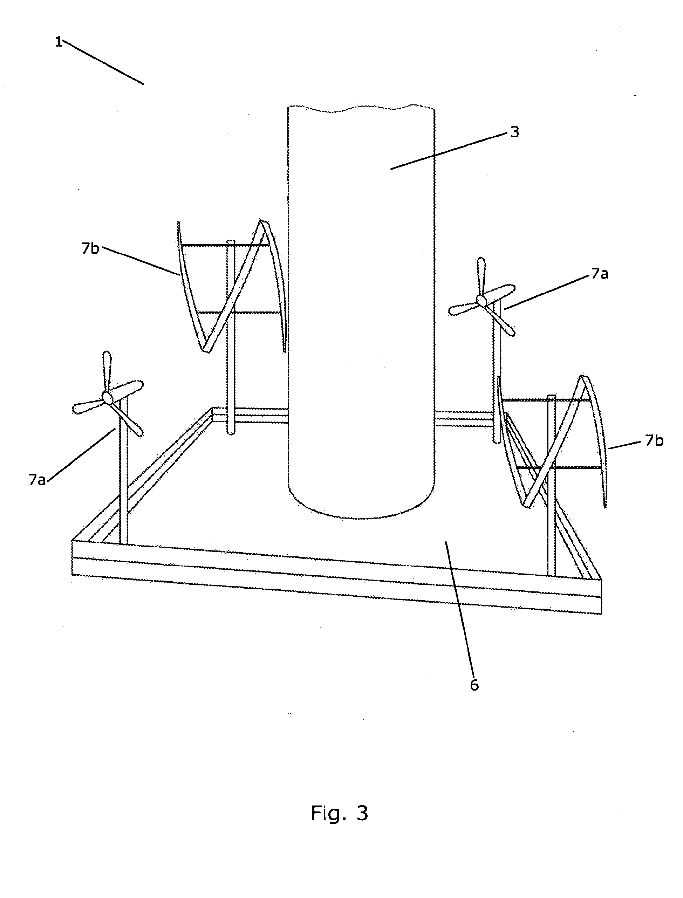

Fig. 3 is a detail of the wind turbine arrangement 1 Figs. 1 and 2. In Fig. 3 the platform 6 and the secondary wind turbines 7a, 7b are clearly shown. Furthermore, all four secondary wind turbines 7a, 7b are visible, and their positions on the platform 6 can be seen.

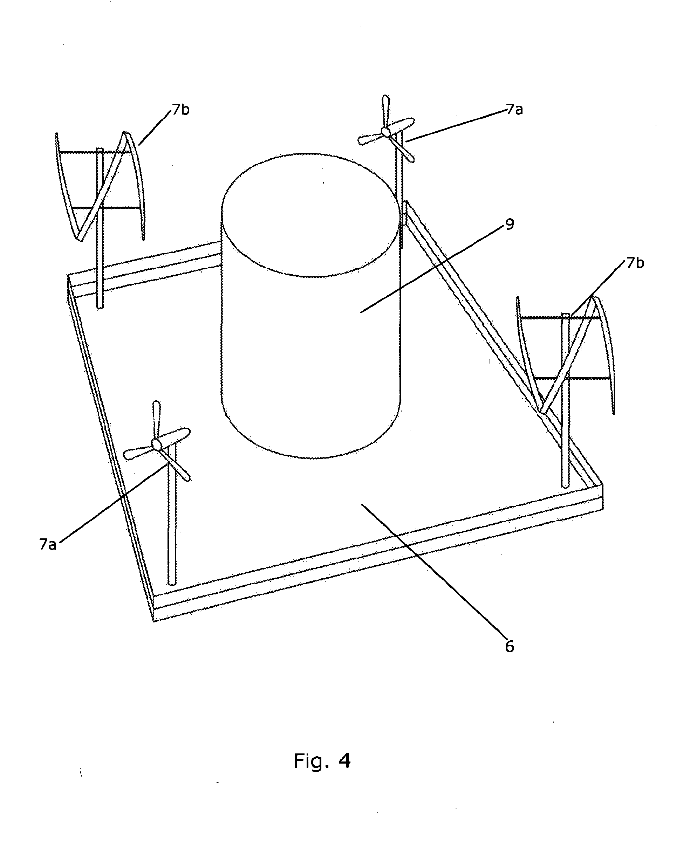

Fig. 4 is a perspective view of a platform 6 for the wind turbine arrangement of Figs. 1-3. As described above, the platform 6 carries the four secondary wind turbines 7a, 7b. Furthermore, a connecting piece 9 is mounted on the platform 6. The connecting piece 9 is used for mounting the tower of the main wind turbine on the platform 6.

The secondary wind turbines 7a, 7b and the connecting piece 9 may be mounted on the platform 6 at a manufacturing site, and the platform, along with the secondary wind turbines 7a, 7b and the connecting piece 9, may be transported to the operating site of the wind turbine arrangement as a unit. In this case the secondary wind turbines 7a, 7b are assembled at the manufacturing site, and relevant cabling may be provided between the secondary wind turbines 7a, 7b and the connecting piece 9. Thereby it is easier to assemble the wind turbine arrangement at the operating site, and the secondary wind turbines 7 as well as the cabling may be tested before the platform 6 is transported to the operating site.

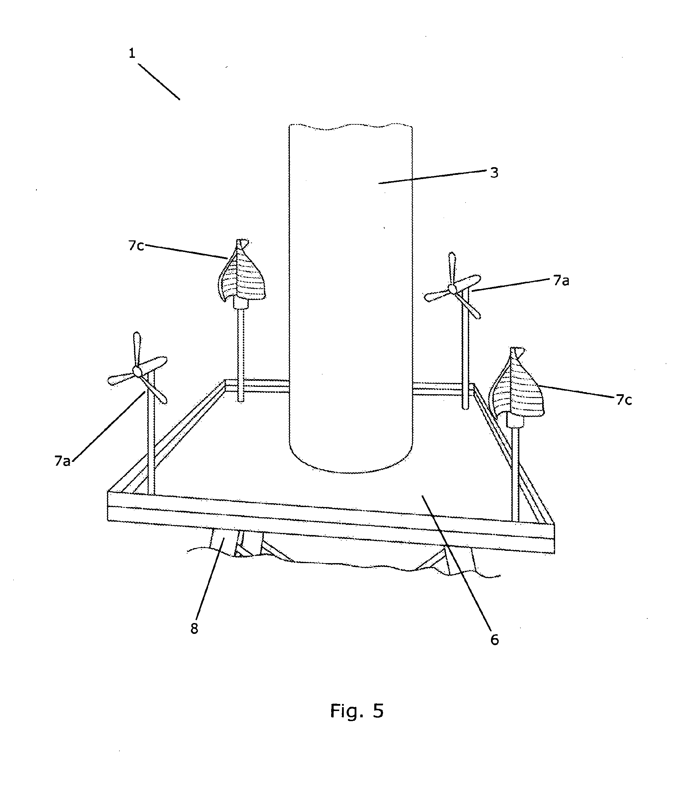

Fig. 5 shows a detail of a wind turbine arrangement 1 according to a second embodiment of the invention. The wind turbine arrangement 1 of Fig. 5 is very similar to the wind turbine arrangement 1 of Figs. 1-3, and will therefore not be described in detail here. Thus, the wind turbine arrangement 1 of Fig. 5 comprises a main wind turbine, of which only the tower 3 is visible, and four secondary wind turbines 7a, 7c. The secondary wind turbines 7a, 7c and the tower 3 of the main wind turbine are mounted on a platform 6 which is in turn mounted on an offshore foundation 8.

In the wind turbine arrangement 1 of Fig. 5, two of the secondary wind turbines 7a are horizontal axis wind turbines (HAWT) identical to the ones of the wind turbine arrangement 1 of Figs. 1-3. The other two secondary wind turbines 7c are vertical axis wind turbines (VAWT), but of a different kind than the ones used in the wind turbine arrangement 1 of Figs. 1-3.

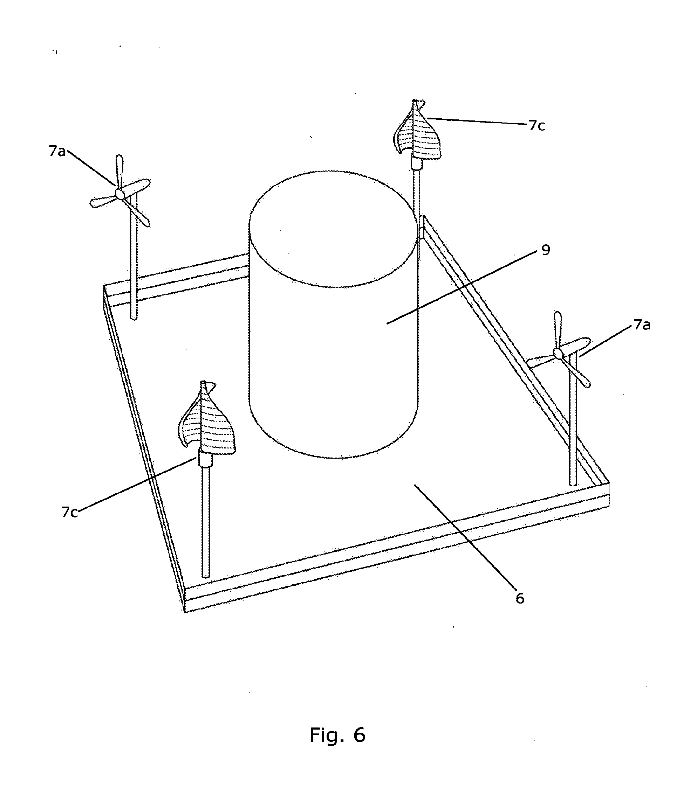

Fig. 6 is a perspective view of a platform 6 for the wind turbine arrangement 1 of Fig. 5. Similarly to the platform 6 of Fig. 4, the platform 6 of Fig. 6 has the four secondary wind turbines 7a, 7c and a connecting piece 9 mounted thereon. Accordingly, the secondary wind turbines 7a, 7c and the connecting piece 9 may be mounted on the platform 6 at a manufacturing site, and the platform 6 may be transported to the operating site of the wind turbine arrangement along with the secondary wind turbines 7a, 7cthe connecting piece 9 as a single unit, as described above with reference to Fig. 4.

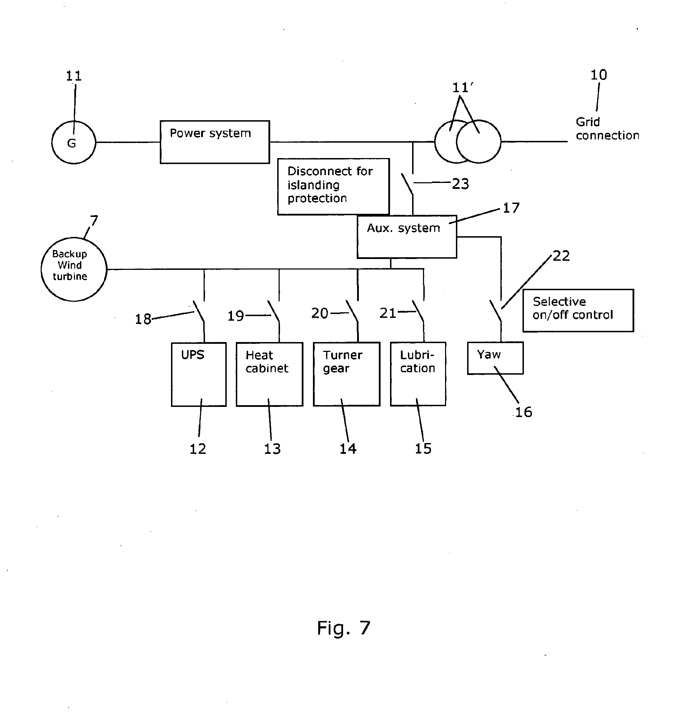

Fig. 7 is a block diagram illustrating power consuming internal electrical systems of a wind turbine arrangement according to an embodiment of the invention. The wind turbine arrangement comprises a main wind turbine and one or more secondary wind turbines 7, and it could, e.g., be of the kind illustrated in Figs. 1-3 or of the kind illustrated in Fig. 5.

The main wind turbine comprises a generator 11 which is connected to a power grid 10, and a number of other wind turbines generators 11' are also connected to the power grid 10. Accordingly, the main wind turbine produces power by means of the generator 11, and supplies the produced power to the power grid 10.

The main wind turbine comprises a number of power consuming internal systems, which in Fig. 7 are in the form of an uninterruptable power supply (UPS) 12, a cabinet heating system 13, a turner gear 14, lubrication systems 15 and a yaw system 16. Each of the power consuming internal systems 12, 13, 14, 15, 16 may be connected to or disconnected from a power distribution system 17, via respective switches 18, 19, 20, 21, 22. Thereby it is possible to control whether or not a given power consuming internal system 12, 13, 14, 15, 16 receives power.

Under normal operating conditions, the power distribution system 17 is connected to the power grid 10 via switch 23. Thus, the power consuming internal systems 12, 13, 14, 15, 16 receive power from the power grid 10. Braking mechanisms of the secondary wind turbines 7 may be in an activated state in this situation, as described above.

In the case that the wind turbine arrangement is disconnected from the power grid 10, illustrated by the switch 23 being in an open state, the secondary wind turbines 7 are activated as described above. Accordingly, the power distribution system 17 receives power produced by the secondary wind turbines 7, and the power consuming internal systems 12, 13, 14, 15, 16 are powered by means of the secondary wind turbines 7, which thereby operate as a backup power supply.

One example of operation of the wind turbine arrangement during interruption of the connection to the power grid 10 could be as follows.

No wind or very low wind speed: All of the switches 18, 19, 20, 21, 22 are in an open state, i.e. none of the power consuming internal systems 12, 13, 14, 15, 16 are operational, but the braking mechanisms of the secondary wind turbines have been released.

Wind speed increases: The secondary wind turbines 7 start producing limited power. Switch 18 is moved to a closed state, thereby allowing the UPS 12 to charge.

Wind speed increases further: The power produced by the secondary wind turbines 7 increases. Turbine controller starts up with limited functionality, such as wind sensing and yaw controller.

Wind speed reaches full production limit for the secondary wind turbines 7: Main wind turbine will be able to yaw to correct position. Thus the switch 22 is moved to a closed position, allowing the yaw system 16 to receive power.

When the main wind turbine has been yawed to the correct position relative to the wind direction, other power consuming internal systems will be powered after the following scheme:
1. UPS/backup sources 12 charging
2. Electrical cabinet heating 13
3. Turning gear/generator 14
4. Lubrication of gear/generator 15
5. Nacelle heating
6. Pitch pump pressure build-up.

## Claims

1. A wind turbine arrangement (1) comprising:
- a main wind turbine (2) arranged to produce electrical power, said main wind turbine (2) being adapted to supply produced electrical power to an external power recipient, and said main wind turbine (2) comprising one or more power consuming internal systems,
- at least one secondary wind turbine (7a, 7b) arranged to produce electrical power, said secondary wind turbine(s) (7a, 7b) being adapted to supply produced electrical power to at least some of the power consuming internal system(s) of the main wind turbine (2), and said secondary wind turbine(s) (7a, 7b) being electrically disconnected from the external power recipient,
- wherein at least one of the secondary wind turbine(s) (7a, 7b) is arranged to operate as a wind sensor.

2. A wind turbine arrangement (1) according to claim 1, wherein the external power recipient is or comprises a power grid.

3. A wind turbine arrangement (1) according to claim 1 or 2, wherein the power consuming internal system(s) include(s) a yaw system.

4. A wind turbine arrangement (1) according to any of the preceding claims, wherein the power consuming internal system(s) include(s) one or more lubrication systems for one or more moving parts of the main wind turbine.

5. A wind turbine arrangement (1) according to any of the preceding claims, wherein the power consuming internal system(s) include(s) one or more power storage devices.

6. A wind turbine arrangement (1) according to any of the preceding claims, wherein the secondary wind turbine(s) (7a, 7b) form(s) a backup power supply for a primary power supply to the power consuming internal system(s).

7. A wind turbine arrangement (1) according to claim 6, wherein each of the secondary wind turbine(s) (7a, 7b) comprises a braking mechanism arranged to prevent the secondary wind turbine (7a, 7b) from producing power when the braking mechanism is in an activated state, wherein the braking mechanism(s) of the secondary wind turbine(s) is/are in an activated state during normal operation of the main wind turbine, and wherein the braking mechanism(s) is/are moved to a deactivated state in the case that the primary power supply to the power consuming internal system(s) is interrupted.

8. A wind turbine arrangement (1) according to any of the preceding claims, wherein the main wind turbine (2) and the secondary wind turbine(s) (7a, 7b) are mounted on a common mounting structure (6).

9. A wind turbine arrangement (1) according to any of the preceding claims, the wind turbine arrangement comprising at least two secondary wind turbines (7a, 7b).

10. A wind turbine arrangement (1) according to claim 9, wherein the secondary wind turbines (7a, 7b) are arranged relative to the main wind turbine (2) and relative to each other in such a manner that at least one secondary wind turbine (7a, 7b) is arranged out of the wake or lee of the main wind turbine, at any wind direction.

11. A wind turbine arrangement (1) according to any of the preceding claims, wherein at least one of the secondary wind turbine(s) (7b) is/are (a) vertical axis wind turbine(s) (VAWT).

12. A wind turbine arrangement (1) according to any of the preceding claims, wherein at least one of the secondary wind turbine(s) (7a) is/are (a) horizontal axis wind turbine(s) (HAWT).

13. A method for performing yawing operation on a main wind turbine (2) of a wind turbine arrangement (1) according to any of the preceding claims, the method comprising the steps of:
- detecting an interruption of a primary power supply to the power consuming internal system(s) of the main wind turbine,
- allowing the secondary wind turbine(s) (7a, 7b) to supply power to the power consuming internal system(s) of the main wind turbine in response to the detection of an interruption of the primary power supply,
- using power produced by the secondary wind turbine(s) (7a, 7b) for performing yawing operation of the main wind turbine in order to position the main wind turbine (2) in a safe position, and
- measuring wind speed by means of one or more of the secondary wind turbine(s) (7a, 7b).

14. A method according to claim 13, wherein the step of allowing the secondary wind turbines (7a, 7b) to supply power to the power consuming internal system(s) comprises deactivating a braking mechanism of each of the secondary wind turbine(s), thereby allowing the secondary wind turbine(s) to produce power.

## Patentansprüche

1. Eine Windturbinenanordnung (1), aufweisend:
- eine Hauptwindturbine (2), die eingerichtet ist, um elektrische Energie zu erzeugen, wobei die genannte Hauptwindturbine (2) angepasst ist, um einen externen Energieempfänger mit der erzeugten elektrischen Energie zu versorgen, und die genannte Hauptwindturbine (2) ein oder mehrere energieverbrauchende, interne Systeme aufweist,
- mindestens eine zweitrangige Windturbine (7a, 7b), die eingerichtet ist, um elektrische Energie zu erzeugen, wobei die genannte(n) zweitrangige(n) Windturbine(n) (7a, 7b) angepasst ist/sind, um das/die energieverbrauchende(n), interne(n) System(e) der Hauptwindturbine (2) mindestens teilweise mit der erzeugten elektrischen Energie zu versorgen, und die genannte(n) zweitrangige(n) Windturbine(n) (7a, 7b) elektrisch von dem externen Energieempfänger getrennt sind,
- wobei mindestens eine der zweitrangigen Windturbine(n) (7a, 7b) angeordnet ist, um als Windsensor zu fungieren.

2. Eine Windturbinenanordnung (1) nach Anspruch 1,
wobei der externe Energieempfänger ein Stromnetz ist oder aufweist.

3. Eine Windturbinenanordnung (1) nach Anspruch 1 oder 2,
wobei das/die energieverbrauchende(n), interne(n) System(e) ein Windrichtungsnachführungs-System beinhalte(t)/(n).

4. Eine Windturbinenanordnung (1) nach einem der voranstehenden Ansprüche,
wobei das/die energieverbrauchende(n), interne(n) System(e) ein oder mehrere Schmiersystem(e) für ein oder mehrere bewegliche Teile der Hauptwindturbine beinhalte(t)/(n).

5. Eine Windturbinenanordnung (1) nach einem der voranstehenden Ansprüche,
wobei das/die energieverbrauchende(n), interne(n) System(e) ein oder mehrere Energiespeicher beinhalte(t)/(n).

6. Eine Windturbinenanordnung (1) nach einem der voranstehenden Ansprüche,
wobei die zweitrangige(n) Windturbine(n) (7a, 7b) eine Reserve-Energieversorgung für eine primäre Energieversorgung der/des energieverbrauchende(n), interne(n) System(e)/(s) bildet.

7. Eine Windturbinenanordnung (1) nach Anspruch 6,
wobei jede der zweitrangigen Windturbine(n) (7a, 7b) einen Bremsmechanismus aufweist, der eingerichtet ist um zu verhindern, dass die zweitrangige Windturbine (7a, 7b) Energie erzeugt wenn der Bremsmechanismus sich in einem aktivierten Zustand befindet, wobei der/die Bremsmechanism(us)/(en) der zweitrangigen Windturbine(n) (7a, 7b) sich während des normalen Betriebs der Hauptwindturbine in einem aktivierten Zustand befinde(t)/(n), und wobei der/die Bremsmechanism(us)/(en) im Falle, dass die primäre Energieversorgung der/des energieverbrauchende(n), interne(n) System(e)/(s) unterbrochen wird, in einen deaktivierten Zustand bewegt wird/werden.

8. Eine Windturbinenanordnung (1) nach einem der voranstehenden Ansprüche,
wobei die Hauptwindturbine (2) und die zweitrangige(n) Windturbine(n) (7a, 7b) auf einem gemeinsamen Montageträger montiert sind.

9. Eine Windturbinenanordnung (1) nach einem der voranstehenden Ansprüche,
wobei die Windturbinenanordnung (1) mindestens zwei zweitrangige Windturbinen (7a, 7b) aufweist.

10. Eine Windturbinenanordnung (1) nach Anspruch 9,
wobei die zweitrangigen Windturbinen (7a, 7b) relativ zur Hauptwindturbine (2) und relativ zueinander in einer Weise angeordnet sind, dass bei jedweder Windrichtung mindestens eine zweitrangige Windturbine (7a, 7b) außerhalb des Windschattens oder Lee der Hauptturbine angeordnet ist.

11. Eine Windturbinenanordnung (1) nach einem der voranstehenden Ansprüche,
wobei mindestens eine der zweitrangigen Windturbine(n) (7a, 7b) eine Vertikalachswindturbine (VAWT) ist.

12. Eine Windturbinenanordnung (1) nach einem der voranstehenden Ansprüche,
wobei mindestens eine der zweitrangigen Windturbine(n) (7a, 7b) eine Horizontalachswindturbine (HAWT) ist.

13. Ein Verfahren zum Ausführen eines Windrichtungsnachführungs-Manövers an einer Hauptwindturbine (2) einer Windturbinenanordnung (1) nach einem der voranstehenden Ansprüche, wobei das Verfahren die folgenden Schritte umfasst:
- Erkennen einer Unterbrechung einer primären Energieversorgung zu dem/den energieverbrauchenden, internen System(en) der Hauptwindturbine,
- In Erwiderung auf das Erkennen einer Unterbrechung der primären Energieversorgung zulassen, dass die zweitrangige(n) Windturbine(n) (7a, 7b) das/die energieverbrauchende(n), interne(n) System(e) der Hauptwindturbine mit Energie versorg(t)/(en),
- Verwenden der von der/den zweitrangigen Windturbine(n) (7a, 7b) erzeugten Energie zum Ausführen eines Windrichtungsnachführungs-Manövers der Hauptwindturbine, um die Hauptwindturbine (2) in eine sichere Lage zu bringen, und
- Messen der Windgeschwindigkeit mittels einer oder mehrerer zweitrangige(n)/(r) Windturbine(n) (7a, 7b).

14. Ein Verfahren nach Anspruch 13, wobei der Schritt des Zulassens, dass die zweitrangige(n) Windturbine(n) (7a, 7b) das/die energieverbrauchende(n), interne(n) System(e) der Hauptwindturbine mit Energie versorg(t)/(en), das Deaktivieren eines Bremsmechanismus einer jeden der zweitrangigen Windturbine(n),und dadurch zulassen, dass die zweitrangige(n) Windturbine(n) Energie erzeug(t)/(en), aufweist.

## Revendications

1. Aménagement de turbines d'éolienne (1) comprenant :
- une turbine d'éolienne principale (2) aménagée pour produire de l'énergie électrique, ladite turbine d'éolienne principale (2) étant à même de fournir l'énergie électrique produite à un récipient d'énergie externe et ladite turbine d'éolienne principale (2) comprenant un ou plusieurs systèmes internes consommateurs d'énergie,
- au moins une turbine d'éolienne secondaire (7a, 7b) aménagée pour produire de l'énergie électrique, la ou lesdites turbines d'éolienne secondaires (7a, 7b) étant à même de fournir l'énergie électrique produite à au moins certains du ou des systèmes internes consommateurs d'énergie de la turbine d'éolienne principale (2) et la ou lesdites turbines d'éolienne secondaires (7a, 7b) étant déconnectées électriquement du récipient d'énergie externe,
- dans lequel au moins l'une des turbines d'éolienne secondaires (7a, 7b) est aménagée pour opérer comme capteur de vent.

2. Aménagement de turbines d'éolienne (1) selon la revendication 1, dans lequel le récipient d'énergie externe est ou comprend un réseau électrique.

3. Aménagement de turbines d'éolienne (1) selon la revendication 1 ou la revendication 2, dans lequel le ou les systèmes internes consommateurs d'énergie comprend ou comprennent un système de lacet.

4. Aménagement de turbines d'éolienne (1) selon l'une quelconque des revendications précédentes, dans lequel le ou les systèmes internes consommateurs d'énergie comprend ou comprennent un ou plusieurs systèmes lubrifiants pour une ou plusieurs parties mobiles de la turbine d'éolienne principale.

5. Aménagement de turbines d'éolienne (1) selon l'une quelconque des revendications précédentes, dans lequel le ou les systèmes internes consommateurs d'énergie comprend ou comprennent un ou plusieurs dispositifs de stockage d'énergie.

6. Aménagement de turbines d'éolienne (1) selon l'une quelconque des revendications précédentes, dans lequel la ou les turbines d'éolienne secondaires (7a, 7b) forme(nt) une alimentation électrique de réserve pour une alimentation électrique principale au(x) système(s) interne(s) consommateur(s) d'énergie.

7. Aménagement de turbines d'éolienne (1) selon la revendication 6, dans lequel chacune des turbines d'éolienne secondaires (7a, 7b) comprend un mécanisme de freinage aménagé pour empêcher la turbine d'éolienne secondaire (7a, 7b) de produire de l'énergie lorsque le mécanisme de freinage est à l'état activé, dans lequel le ou les mécanismes de freinage de la ou des turbines d'éolienne secondaires est ou sont dans un état activé au cours d'un fonctionnement normal de la turbine d'éolienne principale et dans lequel le ou les mécanismes de freinage est ou sont déplacés à l'état désactivé dans le cas où l'alimentation électrique principale au(x) système(s) interne(s) consommateur(s) d'énergie est interrompue.

8. Aménagement de turbines d'éolienne (1) selon l'une quelconque des revendications précédentes, dans lequel la turbine d'éolienne principale (2) et la ou les turbines d'éolienne secondaires (7a, 7b) sont montées sur une structure de montage commune (6).

9. Aménagement de turbines d'éolienne (1) selon l'une quelconque des revendications précédentes, dans lequel l'aménagement de turbines d'éolienne comprend au moins deux turbines d'éolienne secondaires (7a, 7b).

10. Aménagement de turbines d'éolienne (1) selon la revendication 9, dans lequel les turbines d'éolienne secondaires (7a, 7b) sont aménagées par rapport à la turbine d'éolienne principale (2) et l'une vis-à-vis de l'autre de sorte qu'au moins une turbine d'éolienne secondaire (7a, 7b) soit aménagée hors du remous ou à l'abri du vent de la turbine d'éolienne principale, dans toutes directions du vent.

11. Aménagement de turbines d'éolienne (1) selon l'une quelconque des revendications précédentes, dans lequel au moins l'une des turbines d'éolienne secondaires (7b) est une turbine d'éolienne à axe vertical (VAWT).

12. Aménagement de turbines d'éolienne (1) selon l'une quelconque des revendications précédentes, dans lequel au moins l'une des turbines d'éolienne secondaires (7a) est une turbine d'éolienne à axe horizontal (HAWT).

13. Procédé permettant de réaliser une opération de lacet sur une turbine d'éolienne principale (2) d'un aménagement de turbines d'éolienne (1) selon l'une quelconque des revendications précédentes, le procédé comprenant les étapes consistant à :
- détecter une interruption d'une alimentation électrique principale au(x) système(s) interne(s) consommateur(s) d'énergie de la turbine d'éolienne principale,
- permettre à la ou aux turbines d'éolienne secondaires (7a, 7b) de fournir de l'énergie au(x) système(s) interne(s) consommateur(s) d'énergie de la turbine d'éolienne principale en réponse à la détection d'une interruption de l'alimentation électrique principale,
- utiliser l'énergie produite par la ou les turbines d'éolienne secondaires (7a, 7b) pour effectuer une opération de lacet de la turbine d'éolienne principale afin de positionner la turbine d'éolienne principale (2) en position sûre, et
- mesurer la vitesse du vent au moyen d'une ou plusieurs des turbines d'éolienne secondaires (7a, 7b).

14. Procédé selon la revendication 13, dans lequel l'étape permettant aux turbines d'éolienne secondaires (7a, 7b) de fournir de l'énergie au(x) système(s) interne(s) consommateur(s) d'énergie comprend la désactivation d'un mécanisme de freinage de chacune des turbines d'éolienne secondaires, permettant de la sorte à la ou aux turbines d'éolienne secondaires de produire de l'énergie.
